# EUROPEAN PATENT SPECIFICATION

(11) **EP 4 477 473 B1**
(45) Date of publication and mention of the grant of the patent: **25.02.2026**
(21) Application number: 24179895.8
(22) Date of filing: 04.06.2024
(51) Int. Cl.: B60R 11/02

(54) **IMPROVED VEHICULAR SUPPORT SYSTEM**
VERBESSERTES FAHRZEUGSTÜTZSYSTEM
SYSTÈME DE SUPPORT DE VÉHICULE AMÉLIORÉ

(30) Priority: 12.06.2023 IT 202300011958
(43) Date of publication of application: 18.12.2024
(73) Proprietor: IVECO S.P.A., 10156 Torino (IT)
(72) Inventor: VERGANO, Raffaele, 10156 TORINO (IT)
(74) Representative: Studio Torta S.p.A.

(56) References cited:
- CA-A1- 2 505 344
- CN-A- 109 131 136
- CN-U- 207 466 532
- DE-U1- 202017 003 554
- KR-A- 20220 081 952
- US-A1- 2014 103 087
- US-A1- 2016 288 731

## Description

### TECHNICAL FIELD

The present invention relates to a vehicular support.

The present invention finds its preferred, though not exclusive, application in a cab of a vehicle, such as a commercial vehicle. This application will be referred to hereinafter by way of example.

### STATE OF THE PRIOR ART

Commercial vehicles, such as Light Commercial Vehicles (LCV), or heavy-duty vehicles, such as lorries or trucks, are equipped with a cab defining a driving position.

There is an increasing need to provide cabs which are as comfortable and ergonomic as possible. One element affecting the comfort and ergonomics of cabs is the positioning of control displays controlling the vehicle or parts thereof.

In the state of the art, such displays are fixed to fixed positions on the dashboard according to the specific type of vehicle and according to the driver's needs.

Therefore, a substantially artisan operation is needed to modify the dashboard in order to make the holes to fix the control display.

It is clear that this manual operation is time-consuming, difficult and prone to error. In addition, if the position of the display were to change over time, the dashboard would have to be reworked and the previous holes would have to be repaired or they would be visible.

Furthermore, once fixed, the display cannot be moved, consequently its position may not be advantageous depending on the height of the driver, which can vary considerably.

Further known systems are disclosed in patent publications CN207466532 U, showing the preamble of claim 1, DE202017003554 U1, KR20220081952 A, US2014103087 A1, US2016288731 A1, CA2505344 A1 or CN109131136 A.

The object of the present invention is to meet the above needs in an optimized and cost-effective manner.

### SUMMARY OF THE INVENTION

Said object is achieved by means of a support system and a vehicle as claimed in the appended claims.

### BRIEF DESCRIPTION OF THE DRAWINGS

For a better understanding of the present invention, a preferred embodiment is described below by way of non-limiting example and with reference to the accompanying drawings, wherein:

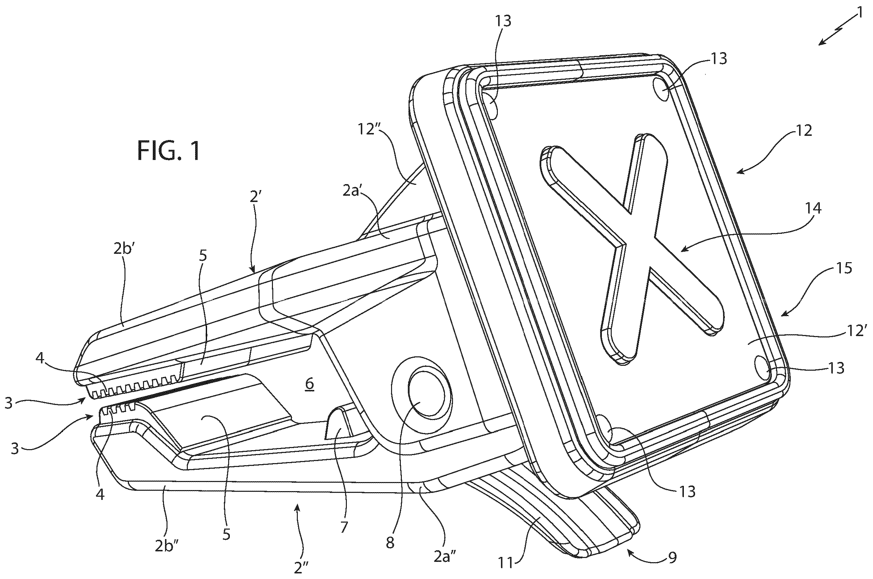

- Figure 1 is a perspective view of a support system according to the invention;

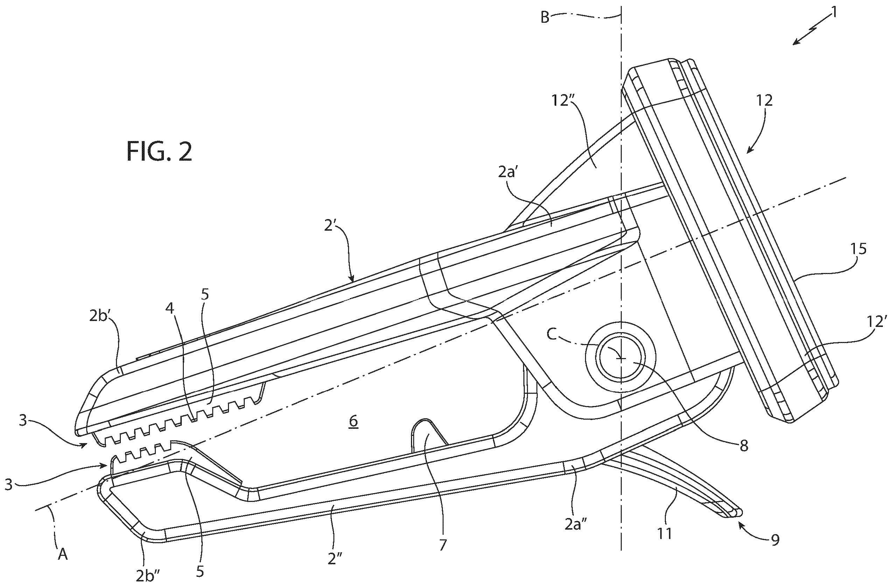

- Figure 2 is a side view of the support system in Figure 1;

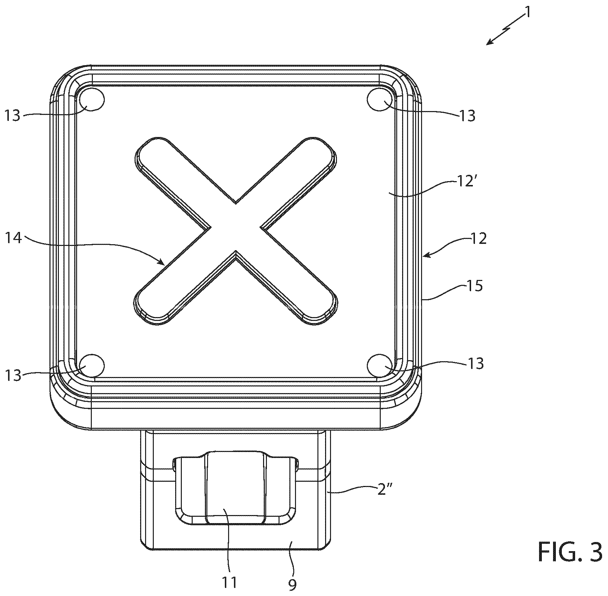

- Figure 3 is a front view of the support system in Figure 1;
- Figures 4A and 4B illustrate two different positions of the support system according to Figure 1 on a vehicular portion.

### DETAILED DESCRIPTION OF THE INVENTION

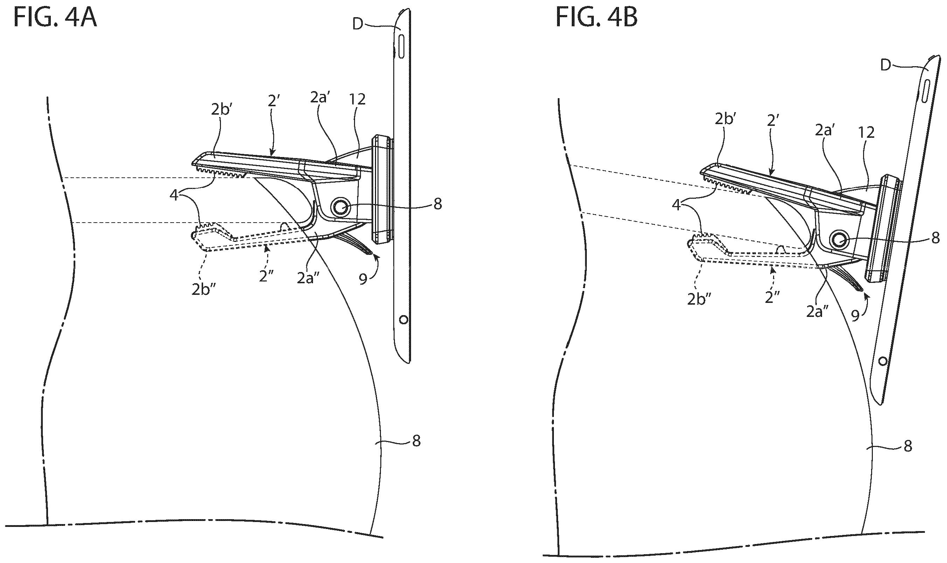

In the figures shown herein, 1 indicates a support system according to the invention, which can be used to fix a device D to a vehicular portion 2 (Figures 4A-4B), such as, for example, a portion of a vehicular dashboard.

The support system 1 is advantageously shaped like a peg and therefore comprises a first jaw 2' and a second jaw 2'', each extending along a longitudinal axis A of the support system and connected to each other as described below.

In particular, each jaw 2', 2'' comprises a first end portion 2a', 2a'' and a second end portion 2b', 2b'' facing each other along a vertical axis B perpendicular to the longitudinal axis A.

The first end portions 2a', 2a'' are connected to each other as described below so as to allow the second end portions 2b', 2b'' to move away from each other, in particular to rotate around a common rotation axis B, perpendicular to the longitudinal and transversal axes A, B, between a first position, in which they are at a minimum distance from each other, potentially in contact, and a second position of maximum distance from each other.

In particular, the support system comprises engagement portions 3 carried by each of the second end portions 2b', 2b'' and configured to cooperate in contact with the aforementioned vehicular portion 2. Advantageously, these engagement portions 3 comprise a plurality of teeth 4 carried by projections 5 extending starting from the respective second end portions 2b', 2b''.

In further detail, the upper jaw 2' has a substantially constant shape along the longitudinal axis A, whereas the lower jaw 2'' has a greater thickness in the second end 2b", thus defining an inverted "L" shape.

Preferably, the teeth 4 made on the second end portion 2b'' of the lower jaw 2'' are made on a projection running along this thicker portion and are less along the extension of the longitudinal axis A than the teeth 4 made on the second end portion 2b' of the upper jaw 2'.

A space 6 is defined between the upper jaw 2' and the lower jaw 2", the space 6 being vertically delimited by the intermediate portions of the same jaws 2', 2" and longitudinally delimited by the first end portions 2a', 2a'' and the second end portions 2b', 2b''.

The space 6 is configured to house, on the inside, part of the vehicular portion 2 on which the jaws 2', 2'' exert a compressive force suitable to keep the support system 1 fixed thereto.

The support system 1 further comprises adjustment means 7 housed in the space 6 and configured to vary the free housing space thereof. In detail, the adjustment means 7 comprise a protuberance extending from one of the jaws 2', 2'' in the space 6, for example as shown by the lower jaw 2''.

As mentioned above, the two jaws 2', 2'' are connected to each other at the first ends 2a', 2a'' via a movable connection, such as a hinge 8. Advantageously, the hinge 8 is provided between the first end 2a' and the second end 2a'' and also includes elastic means, not shown, configured to exert a force opposing the transition of the jaws 2', 2" from the first position to the second position as mentioned above.

In detail, the first end 2a' of the upper jaw 2' is sized so as to house, on the inside, along the direction of the rotation axis C, the first end 2a" of the lower jaw 2''. For this purpose, in the embodiment described, the first end 2a' of the upper jaw 2' is U-shaped and contains, within the arms of this "U", the first end 2a'' of the lower jaw 2".

Advantageously, the support system comprises release means 9 configured to bypass the hinge 8 and allow the jaws 2', 2'' to open when controlled by the user in order to facilitate the coupling to the vehicular portion 2.

These release means 9 may comprise, as shown, a lever 11 suitable to control, for example, a bayonet fitting designed to take a first operating configuration, where it keeps the operation of the hinge 8 free, and a second operating configuration, where it opens the jaws 8', 8'' by-passing the hinge 8.

Advantageously, in the embodiment described, this lever 11 is movably housed through the lower jaw 2'' close to the hinge 8.

The support system 1 further comprises a coupling portion 12 carried by one of the upper jaw 2' and lower jaw 2'' and configured to allow the above-mentioned device D to be fixed. in the embodiment described, the coupling portion 12 is carried by the upper jaw 2'.

In particular, the coupling portion 12 comprises a support wall 12' fixed to the upper jaw 2'. In the embodiment shown, the wall 12' has a substantially quadrangular shape, preferably square, extending along the direction of the vertical B and rotation C axes, i.e., perpendicular to the longitudinal axis A.

The coupling portion 12 may also include a reinforcing flange 12'' extending perpendicular to the support wall 12' relative to the upper jaw 2' and configured to increase the strength of their connection.

Advantageously, the wall 12' and/or the flange 12'' can be made in one piece with the upper jaw 2'.

The coupling portion 12 also defines a plurality of fixing points 13, such as through holes, made on part of the surface of the wall 12'. In the embodiment shown, there are as many holes as the vertices of the shape of the wall 12'. The fixing points 13 allow the fixing of the device D to the support system 1.

In addition, the support system 1 may also comprise magnetic elements 14 carried by the wall 12' and advantageously integrated therewith, which are configured to exert a force for holding the device D on the wall 12.

Furthermore, the support system 1 may comprise damping elements 15 carried by the wall 12' and interposed in contact with the device D when cooperating in contact therewith in order to reduce the transmission of vehicular vibrations. Such damping elements 15 may comprise a sheath of compressible material placed on at least part of the surface of the wall 12', for example on at least part of its outer perimeter or, as in the embodiment shown, on the inner perimeter thereof.

The support system 1 can be made of any material, advantageously of a plastic or polymeric type.

The operation of the above-described embodiment of the support system according to the invention is as follows.

By acting on the release means 9, the user may move the jaws 2', 2'' to their maximum distance so that a vehicular portion 2 can be housed within the space 6, which pivots between them (or between them and the adjustment means 7). Once the desired position has been reached, the device D can be fixed to the coupling portion 12 (Figure 4A).

If the device D is changed or there is a desire to change its position (Figure 4B), it is sufficient to act on the release means 9 again in order to reposition the jaws 2, 2' differently on the vehicular portion 2.

The advantages of a support system according to the invention are clear from the foregoing.

The proposed support system makes it possible to provide a firm support for a device D, without drilling holes in the vehicle dashboard. Furthermore, it is possible to arrange this device D in different positions.

The hinge means 8 equipped with elastic means and the shape of the jaws 2', 2'' make it possible to fix the device D firmly to the vehicular portion 2, even to very thick vehicular portions 2 other than the air vents.

The presence of the magnetic elements 14 and the damping elements 15 also makes it possible to fix the device D firmly, preventing sudden detachments, if the fixing points 13 are not used, or the transmission of vibrations.

Also, the presence of several fixing points 13 makes it possible to fix different devices D to the vehicular portion 2 without necessarily having to drill holes therein.

Lastly, it is clear that modifications and variations may be made to the support system according to the present invention, without however departing from the scope of protection defined by the claims.

For example, the shape of the jaws 2', 2'' or how they couple to each other may vary. Similarly, the engagement portions 3 or the release means 9 can be made in an equivalent way.

In addition, the adjustment means, the magnetic elements 14 and the damping elements 15 can be absent or made in a different shape, as can the number and type of fixing points.

## Claims

1. A support system (1) for fixing a device (D) to a vehicular portion (2), said support system (1) comprising a first jaw (2') and a second jaw (2") each provided with a first end (2a', 2a") and a second end (2b', 2b") opposite along a longitudinal axis (A) of said support system (1), said first and second jaws (2', 2") being connected via a movable connection made between said first ends (2a', 2a") so as to allow the movement of said second ends (2b', 2b") between a first position of minimum distance from each other along a vertical axis (B) perpendicular to said longitudinal axis (A) and a second position of maximum distance from each other along said vertical axis (B), said second ends (2b', 2b") being provided with engagement portions (3) adapted to cooperate in contact with said vehicular portion (2), said support system (1) comprising a coupling portion (12) carried by one of said first and second jaws (2', 2") and configured to allow said device (D) to be rigidly connected thereto, wherein said coupling portion (12) comprises a wall (12') defining a plurality of fixing points (13) to allow the fixing of said device (D),
said system further comprising damping elements (15) carried by said wall (12') and configured to cooperate interposed between said wall (12') and said device (D) when fixed to said wall (12') in order to dampen vehicular vibrations, **characterized in that**
a space (6) is delimited between said first and second jaws (2', 2") suitable for housing, in use, said vehicular portion (2), said support system (1) comprising adjustment means (7) housed in said space (6) and carried by one of said first and second jaws (2', 2") and configured to cooperate in contact with said vehicular portion (2), wherein said adjustment means (7) comprise a protuberance extending from said second jaw (2") towards said first jaw (2').

2. The system according to Claim 1, wherein said fixing points (13) comprise holes passing through said wall (12').

3. The system according to claim 1 or 2, further comprising magnetic elements (14) carried by said wall (12').

4. The system according to one of claims 1 to 3, comprising a flange (12") connecting said wall (12') to said one of said first and second jaws (2', 2").

5. The support system according to one of the preceding claims, comprising release means (9) carried by one of said first and second jaws (2', 2") and configured to carry said first and second jaws (2', 2") in said second position.

6. The support system according to one of the preceding claims, wherein said jaws (2', 2") are each made in one piece.

7. The support system according to one of the preceding claims, wherein said jaws (2', 2") are each made of polymeric/plastic material.

8. The system according to any one of the preceding claims, wherein said movable connection comprises a hinge (8) able to allow rotation around an axis (C) perpendicular to said longitudinal and vertical axes (A, B).

9. The system according to one of the preceding claims, wherein said engagement portions (3) comprise a plurality of teeth (4) extending from the respective first and second jaws (2', 2").

10. The system according to claim 9, wherein said plurality of teeth (4) extend starting from a projection extending starting from the respective first and second jaws (2', 2").

11. The system according to one of the preceding claims, wherein one of said first ends (2a', 2a") is housed inside the other of said first ends (2a', 2a").

12. The system according to one of the preceding claims, wherein said first jaw (2') has a substantially constant thickness between said first end (2a') and said second end (2b'), said second jaw (2") having a greater thickness in said second end (2b') than in said first end (2a').

## Patentansprüche

1. Trägersystem (1) zum Befestigen einer Vorrichtung (D) an einem Fahrzeugabschnitt (2), wobei das Trägersystem (1) eine erste Backe (2') und eine zweite Backe (2") umfasst, die jeweils mit einem ersten Ende (2a', 2a") und einem zweiten Ende (2b', 2b") versehen sind, die entlang einer Längsachse (A) des Trägersystems (1) gegenüberliegen, wobei die erste und die zweite Backe (2', 2") über eine bewegliche Verbindung verbunden sind, die zwischen den ersten Enden (2a', 2a") hergestellt ist, um die Bewegung der zweiten Enden (2b', 2b") zwischen einer ersten Position mit minimalem Abstand voneinander entlang einer vertikalen Achse (B) senkrecht zu der Längsachse (A) und einer zweiten Position mit maximalem Abstand voneinander entlang der vertikalen Achse (B) zu ermöglichen, wobei die zweiten Enden (2b', 2b") mit Eingriffsabschnitten (3) versehen sind, die dazu angepasst sind, in Kontakt mit dem Fahrzeugabschnitt (2) zusammenzuwirken, wobei das Trägersystem (1) einen Kopplungsabschnitt (12) umfasst, der von einer der ersten und der zweiten Backe (2', 2") getragen wird und konfiguriert ist, der Vorrichtung (D) zu ermöglichen, starr damit verbunden zu werden, wobei der Kopplungsabschnitt (12) eine Wand (12') umfasst, die eine Vielzahl von Befestigungspunkten (13) definiert, um die Befestigung der Vorrichtung (D) zu ermöglichen,
wobei das System ferner Dämpfungselemente (15) umfasst, die von der Wand (12') getragen werden und konfiguriert sind, zwischen der Wand (12') und der Vorrichtung (D) angeordnet zusammenzuwirken, wenn sie an der Wand (12') befestigt sind, um Fahrzeugschwingungen zu dämpfen, **dadurch gekennzeichnet, dass**
ein Raum (6) zwischen der ersten und der zweiten Backe (2', 2") begrenzt ist, der geeignet ist, im Gebrauch den Fahrzeugabschnitt (2) aufzunehmen, wobei das Trägersystem (1) Einstellmittel (7) umfasst, die in dem Raum (6) aufgenommen sind und von einer der ersten und der zweiten Backe (2', 2") getragen werden und konfiguriert sind, in Kontakt mit dem Fahrzeugabschnitt (2) zusammenzuwirken, wobei die Einstellmittel (7) einen Vorsprung umfassen, der sich von der zweiten Backe (2") in Richtung der ersten Backe (2') erstreckt.

2. System nach Anspruch 1, wobei die Befestigungspunkte (13) Löcher umfassen, die durch die Wand (12') verlaufen.

3. System nach Anspruch 1 oder 2, ferner umfassend magnetische Elemente (14), die von der Wand (12') getragen werden.

4. System nach einem der Ansprüche 1 bis 3, umfassend einen Flansch (12"), der die Wand (12') mit der einen der ersten und der zweiten Backe (2', 2") verbindet.

5. Trägersystem nach einem der vorhergehenden Ansprüche, umfassend Freigabemittel (9), die von einer der ersten und der zweiten Backe (2', 2") getragen werden und konfiguriert sind, die erste und die zweite Backe (2', 2") in der zweiten Position zu tragen.

6. Trägersystem nach einem der vorhergehenden Ansprüche, wobei die Backen (2', 2") jeweils aus einem Stück hergestellt sind.

7. Trägersystem nach einem der vorhergehenden Ansprüche, wobei die Backen (2', 2") jeweils aus Polymer-/Kunststoffmaterial hergestellt sind.

8. System nach einem der vorhergehenden Ansprüche, wobei die bewegliche Verbindung ein Scharnier (8) umfasst, das in der Lage ist, eine Drehung um eine Achse (C) senkrecht zu der Längs- und der vertikalen Achse (A, B) zu ermöglichen.

9. System nach einem der vorhergehenden Ansprüche, wobei die Eingriffsabschnitte (3) eine Vielzahl von Zähnen (4) umfassen, die sich von der jeweiligen ersten und zweiten Backe (2', 2") erstrecken.

10. System nach Anspruch 9, wobei sich die Vielzahl von Zähnen (4) ausgehend von einem Vorsprung erstrecken, der sich ausgehend von der jeweiligen ersten und zweiten Backe (2', 2") erstreckt.

11. System nach einem der vorhergehenden Ansprüche, wobei eines der ersten Enden (2a', 2a") im Inneren des anderen der ersten Enden (2a', 2a") untergebracht ist.

12. System nach einem der vorhergehenden Ansprüche, wobei die erste Backe (2') eine im Wesentlichen konstante Dicke zwischen dem ersten Ende (2a') und dem zweiten Ende (2b') aufweist, wobei die zweite Backe (2") eine größere Dicke in dem zweiten Ende (2b') als in dem ersten Ende (2a') aufweist.

## Revendications

1. Système de support (1) pour la fixation d'un dispositif (D) à une partie de véhicule (2), ledit système de support (1) comprenant une première mâchoire (2') et une seconde mâchoire (2") dotées chacune d'une première extrémité (2a', 2a") et d'une seconde extrémité (2b', 2b") opposées le long d'un axe longitudinal (A) dudit système de support (1), lesdites première et seconde mâchoires (2', 2") étant reliées par une liaison mobile réalisée entre lesdites premières extrémités (2a', 2a") de manière à permettre le mouvement desdites secondes extrémités (2b', 2b") entre une première position de distance minimale l'une de l'autre le long d'un axe vertical (B) perpendiculaire audit axe longitudinal (A) et une seconde position de distance maximale l'une de l'autre le long dudit axe vertical (B), lesdites secondes extrémités (2b', 2b") étant dotées de parties de mise en prise (3) conçues pour coopérer au contact de ladite partie de véhicule (2), ledit système de support (1) comprenant une partie d'accouplement (12) portée par l'une desdites première et seconde mâchoires (2', 2") et configurée pour permettre audit dispositif (D) d'y être relié de façon rigide, dans lequel ladite partie d'accouplement (12) comprend une paroi (12') définissant une pluralité de points de fixation (13) pour permettre la fixation dudit dispositif (D),
ledit système comprenant en outre des éléments d'amortissement (15) portés par ladite paroi (12') et configurés pour coopérer en étant interposés entre ladite paroi (12') et ledit dispositif (D) lorsqu'ils sont fixés à ladite paroi (12') afin d'amortir des vibrations de véhicule, **caractérisé en ce que**
un espace (6) est délimité entre lesdites première et seconde mâchoires (2', 2"), approprié pour loger, lors de l'utilisation, ladite partie de véhicule (2), ledit système de support (1) comprenant des moyens de réglage (7) logés dans ledit espace (6) et portés par l'une desdites première et seconde mâchoires (2', 2") et configurés pour coopérer au contact de ladite partie de véhicule (2), dans lequel lesdits moyens de réglage (7) comprennent une protubérance s'étendant à partir de ladite seconde mâchoire (2") en direction de ladite première mâchoire (2').

2. Système selon la revendication 1, dans lequel lesdits points de fixation (13) comprennent des trous traversant ladite paroi (12').

3. Système selon la revendication 1 ou 2, comprenant en outre des éléments magnétiques (14) portés par ladite paroi (12').

4. Système selon l'une des revendications 1 à 3, comprenant une bride (12") reliant ladite paroi (12') à ladite une desdites première et seconde mâchoires (2', 2").

5. Système de support selon l'une des revendications précédentes, comprenant des moyens de libération (9) portés par l'une desdites première et seconde mâchoires (2', 2") et configurés pour porter lesdites première et seconde mâchoires (2', 2") dans ladite seconde position.

6. Système de support selon l'une des revendications précédentes, dans lequel lesdites mâchoires (2', 2'') sont chacune fabriquées d'une seule pièce.

7. Système de support selon l'une des revendications précédentes, dans lequel lesdites mâchoires (2', 2") sont chacune composées de matériau polymère/plastique.

8. Système selon l'une quelconque des revendications précédentes, dans lequel ladite liaison mobile comprend une charnière (8) apte à permettre une rotation autour d'un axe (C) perpendiculaire auxdits axes longitudinal et vertical (A, B).

9. Système selon l'une des revendications précédentes, dans lequel lesdites parties de mise en prise (3) comprennent une pluralité de dents (4) s'étendant à partir des première et seconde mâchoires (2', 2") respectives.

10. Système selon la revendication 9, dans lequel ladite pluralité de dents (4) s'étend à partir d'une saillie s'étendant à partir des première et seconde mâchoires (2', 2") respectives.

11. Système selon l'une des revendications précédentes, dans lequel l'une desdites premières extrémités (2a', 2a") est située à l'intérieur de l'autre desdites premières extrémités (2a', 2a").

12. Système selon l'une des revendications précédentes, dans lequel ladite première mâchoire (2') présente une épaisseur sensiblement constante entre ladite première extrémité (2a') et ladite seconde extrémité (2b'), ladite seconde mâchoire (2") présentant une épaisseur supérieure dans ladite seconde extrémité (2b') par rapport à dans ladite première extrémité (2a').
